Europäisches Patentamt

European Patent Office

Office européen des brevets

(11) Numéro de publication: **0 159 239**

**A1**

(12) **DEMANDE DE BREVET EUROPEEN**

(21) Numéro de dépôt: **85400535.2**

(22) Date de dépôt: **20.03.85**

(51) Int. Cl.⁴: **B 21 B 33/00**
**F 16 P 7/00**

(30) Priorité: **20.03.84 FR 8404273**

(43) Date de publication de la demande:
**23.10.85 Bulletin 85/43**

(84) Etats contractants désignés:
**DE GB IT**

(71) Demandeur: **CREUSOT-LOIRE INDUSTRIE**
**La Défense 9/4 place de la Pyramide**
**F-92800 Puteaux(FR)**

(72) Inventeur: **Courbier, Michel**
**13, route de Montcoy**
**F-71670 Le Breuil(FR)**

(74) Mandataire: **Moncheny, Michel et al,**
**c/o Cabinet Lavoix 2 Place d'Estienne d'Orves**
**F-75441 Paris Cedex 09(FR)**

(54) Dispositif de protection contre les surcharges pour une cage de laminoir.

(57) Le dispositif est constitué par un vérin hydraulique (20) intercalé entre deux éléments (12, 16) transmettant l'effort de laminage au bâti (1) de la cage de laminoir. La chambre (23) du vérin (20) est remplie par un liquide sous pression et communique, par l'intermédiaire d'un clapet (40), avec une zone de décharge du liquide sous pression. Le clapet (40) est associé à des moyens le maintenant fermé pendant le fonctionnement normal du laminoir et permettant son ouverture pour la décharge du liquide, en cas de dépassement d'une pression déterminée dans la chambre (23) du vérin (20) résultant d'une augmentation excessive de l'effort de laminage.

Fig 2

Croydon Printing Company Ltd

EP 0 159 239 A1

1

## Dispositif de protection contre les surcharges pour une cage de laminoir

L'invention concerne un dispositif de protection contre les surcharges pour une cage de laminoir comportant un bâti dans lequel sont montés au moins deux cylindres de laminage, par l'intermédiaire d'éléments coopérant avec le bâti pour résister à l'effort de laminage.

Les laminoirs pour tôles ou pour barres de forte épaisseur sont généralement constitués par une cage comportant, à l'intérieur d'un bâti, deux ou quatre cylindres de laminage à axe horizontal, superposés dans la direction verticale et dont les extrémités sont montées rotatives dans des empoises.

Dans le cas d'un laminoir à deux cylindres ou laminoir duo, les deux cylindres sont des cylindres de travail et dans le cas d'un laminoir à quatre cylindres ou laminoir quarto, les deux cylindres extrêmes sont des cylindres d'appui et les deux cylindres intermédiaires des cylindres de travail.

Les empoises sont montées dans le bâti de façon que l'intervalle de laminage correspondant à l'épaisseur du produit et la force de serrage du laminoir puissent être réglés grâce à des moyens également montés dans le bâti de la cage. On utilisera par exemple un dispositif de serrage à vis placé dans la partie supérieure du bâti et exerçant une force de serrage dirigée vers le bas sur le ou les cylindres supérieurs, par l'intermédiaire de leurs empoises. La reprise de l'effort de laminage est donc assurée par l'intermédiaire des empoises et des moyens de serrage en appui sur le bâti.

Dans le cas de laminoirs subissant de très grands efforts de laminage, tels que les laminoirs pour tôles fortes, il est nécessaire de prévoir, lors de la conception de la cage de laminoir, un dispositif de sécurité pour éviter la rupture de composants mécaniques de la cage en cas de surcharge pouvant apparaître en cours de laminage.

2

Les dispositifs de sécurité connus sont généralement des dispositifs mécaniques peu précis et peu fiables présentant des temps de réponse relativement longs, ou des dispositifs hydrauliques à huile ou à graisse qui sont compliqués et coûteux et dont la fonction principale est d'assurer la régulation automatique d'épaisseur du laminoir. De tels dispositifs hydrauliques ne réalisent que de façon auxiliaire la mise en sécurité du laminoir en cas de surcharge.

Dans la demande de brevet DE-A-2.261.990, on a proposé un dispositif de sécurité pour une cage de laminoir comportant un vérin hydraulique intercalé entre deux éléments transmettant l'effort de laminage au bâti de la cage. Le vérin hydraulique est alimenté en liquide sous pression de façon continue, par une pompe, ce qui lui permet d'équilibrer l'effort de laminage. La chambre du vérin est mise en communication avec une zone de décharge par l'intermédiaire d'un clapet associé à un circuit de liquide hydraulique le maintenant fermé, tant que la pression dans la chambre du vérin reste inférieure à une certaine limite. Dans un tel dispositif, la pompe d'alimentation du vérin doit fournir un liquide à une très forte pression pendant le laminage. On est donc en présence d'un circuit de pompage qui doit fonctionner sous très forte pression, en permanence. La fiabilité du dispositif n'est donc pas satisfaisante, des fuites ou ruptures de tuyauteries pouvant se produire. En outre, le circuit hydraulique associé au clapet doit être soigneusement régulé en pression pour que le dispositif de sécurité se déclenche dans les conditions prédéterminées. Un réglage précis et une grande sécurité de déclenchement sont donc difficiles à obtenir. Enfin, ce dispositif de sécurité peut difficilement être adapté à des laminoirs existants et ne permet pas de mesurer de façon simple l'effort de laminage.

Le but de l'invention est donc de proposer un dispositif de protection contre les surcharges pour une

3

cage de laminoir comportant un bâti dans lequel sont montés au moins deux cylindres de laminage, par l'intermédiaire d'éléments coopérant avec le bâti pour résister à l'effort de laminage, constitué par un vérin hydraulique intercalé entre deux éléments transmettant l'effort de laminage au bâti de la cage, dont la chambre recevant un liquide sous pression communique par l'intermédiaire d'un clapet avec une zone de décharge du liquide sous pression, le clapet étant associé à des moyens le maintenant fermé pendant le fonctionnement normal du laminoir et permettant son ouverture pour la décharge du liquide sous pression, en cas de dépassement d'une pression prédéterminée dans la chambre du vérin résultant d'une augmentation excessive de l'effort de laminage, ces moyens comportant un dispositif fournissant un liquide à pression constante d'un côté du clapet, dispositif qui soit très fiable, d'une conception simple, facilement adaptable à des laminoirs existants et qui permette une mesure précise de l'effort de laminage.

Dans ce but, le clapet communique avec le dispositif fournissant du liquide à pression constante, par l'intermédiaire d'une électrovanne commandée par les indications d'un capteur de pression mesurant la pression dans la chambre du vérin hydraulique, de telle sorte que la chambre initialement remplie de liquide sous pression par le dispositif soit totalement isolée pendant le fonctionnement normal du laminoir, du liquide hydraulique maintenant le clapet fermé et qu'en cas de dépassement de la pression prédéterminée dans la chambre, l'électrovanne interrompe l'alimentation du clapet en liquide hydraulique sous pression.

Afin de bien faire comprendre l'invention, on va maintenant décrire à titre d'exemple non limitatif, en se référant aux figures jointes en annexe, un mode de réalisation d'un dispositif de protection contre les surcharges, suivant l'invention, dans le cas d'une cage quarto d'un laminoir à tôles fortes.

4

La Figure 1 est une vue en élévation latérale de la cage de laminoir.

La Figure 2 est une vue en coupe très agrandie du dispositif de protection contre les surcharges de cette cage.

La Figure 3 est une représentation schématique du circuit hydraulique associé au dispositif de protection de la cage de laminoir.

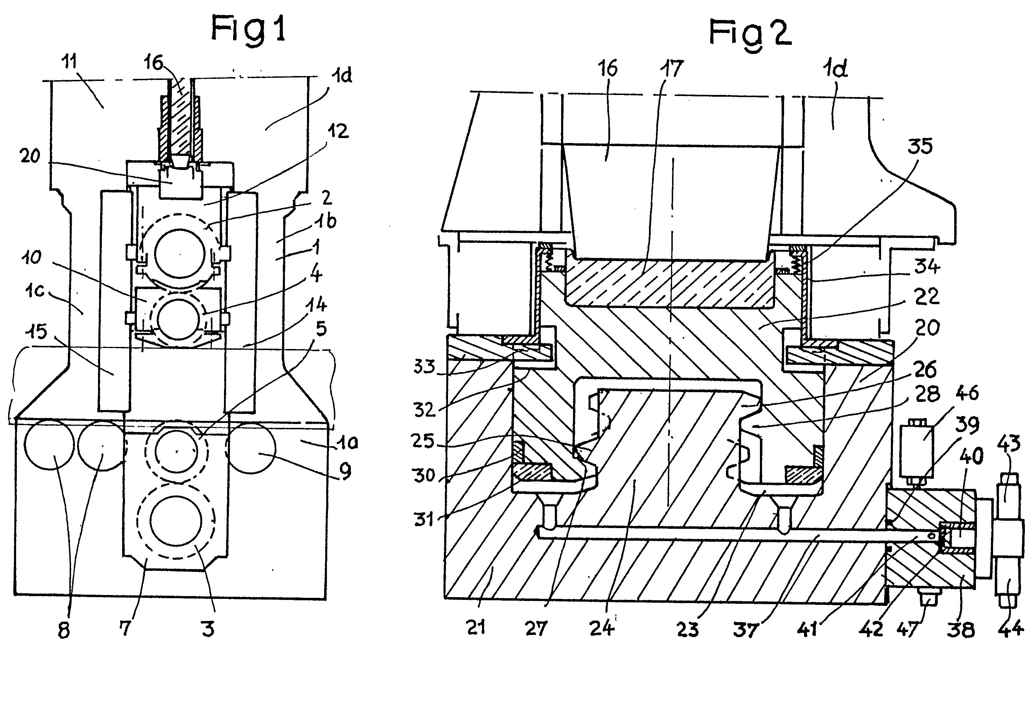

Sur la Figure 1, on voit le bâti 1 d'une cage de laminoir quarto pour le laminage de tôles fortes d'une épaisseur de 50 à 500 mm.

Le bâti 1 comporte un socle 1a, deux montants verticaux 1b et 1c à chacune de ses extrémités latérales et une traverse 1d horizontale reliant les montants à leur partie supérieure.

A l'intérieur du bâti sont montés deux cylindres d'appui 2 et 3 et deux cylindres de travail 4 et 5 constituant un ensemble inférieur 3-5 et un ensemble supérieur 2-4 dans lesquels le cylindre de travail est en appui sur toute sa longueur sur le cylindre d'appui. Les cylindres constituant l'ensemble inférieur 3-5 sont montés rotatifs dans des empoises 7 fixées dans le socle 1a de la cage, en position fixe dans la direction verticale. Le cylindre de travail 5 en position fixe dans la direction verticale et des rouleaux d'appui 8 et 9 montés rotatifs dans le socle 1a de la cage définissent le plan inférieur d'appui du produit plat en cours de laminage.

Le cylindre supérieur de travail 4 est monté rotatif dans une empoise 10 et le cylindre supérieur d'appui 2 est monté rotatif dans une empoise 12. Les empoises 10 et 12 sont montées mobiles en translation verticale dans le bâti 1 grâce à des pièces de guidage vertical 14, 15 fixées sur les montants 1b et 1c respectivement.

Un dispositif de serrage par vis 16 du laminoir est fixé à l'intérieur de la traverse supérieure 1d. L'ex-

5

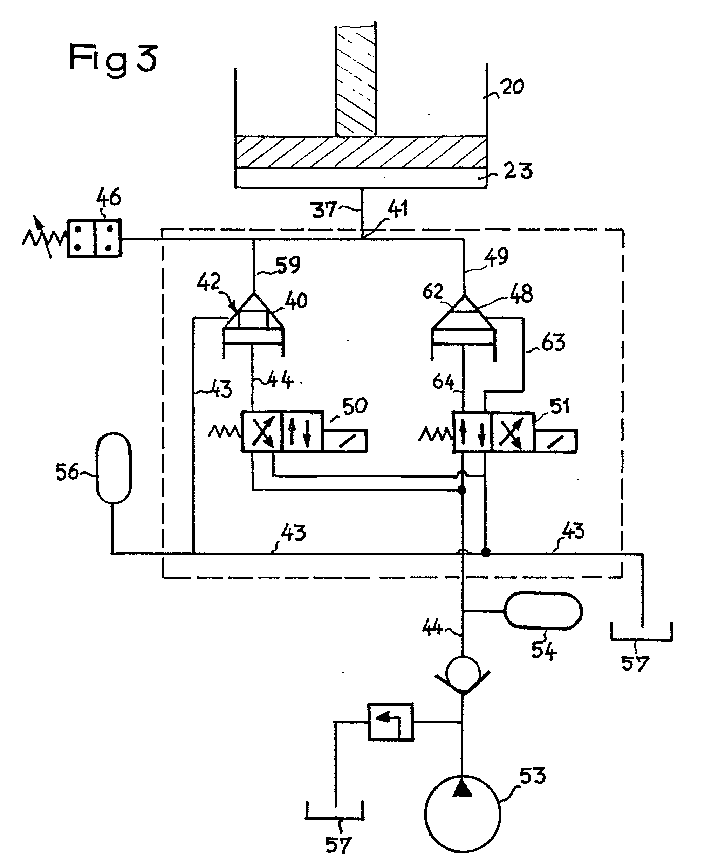

trémité inférieure de la vis de serrage 16 du laminoir
permet d'exercer une force verticale de serrage sur l'ensemble supérieur de cylindres de laminage 2-4, par l'intermédiaire du dispositif de protection 20 qui sera décrit
plus en détail en se référant à la figure 2 et de l'empoise du cylindre d'appui supérieur 12. On peut ainsi régler,
grâce à la vis 16, l'emprise de la cage de laminoir correspondant à l'épaisseur de sortie de la tôle et la force
de serrage du laminoir.

L'effort de laminage est transmis au bâti 1 par
l'intermédiaire des cylindres de travail, des cylindres
d'appui et de leurs empoises. L'empoise 12 du cylindre supérieur 2 est elle-même en appui sur la traverse supérieure 1d du bâti par l'intermédiaire du vérin 20 et de la
vis 16. Le vérin 20 est donc intercalé entre l'empoise 12
et la vis 16 transmettant l'effort de laminage au bâti.

Sur la figure 2, on voit le vérin 20 constitué
par un cylindre 21 en appui sur l'empoise 12 et un piston
22 en contact avec la vis 16 par l'intermédiaire d'un coussinet 17. Le cylindre 21 est usiné intérieurement pour recevoir le piston 22. A l'intérieur du cylindre 21 est usiné une chambre annulaire 23 et une partie en saillie 24
dont la surface latérale externe comporte deux cannelures
circulaires 25 et 26 sur une partie de sa circonférence,
le piston 22 étant lui-même usiné intérieurement pour constituer des cannelures correspondantes 27 et 28. La coopération des cannelures 25 et 27 d'une part et 26 et 28 d'autre part, lorsque le piston est en place dans le cylindre
comme représenté à la figure 2, permet de réaliser une fixation à baïonnette du piston 22 dans le cylindre 21. Le
montage du piston dans le cylindre peut être réalisé en
présentant les cannelures dans une orientation telle
qu'elles ne soientpas en coïncidence puis en faisant tourner l'une des deux pièces par rapport à l'autre d'un quart
de tour. On obtient ainsi une fixation très rapide des

6

deux pièces et la matérialisation de butées haute et basse pour le mouvement relatif dans la direction verticale du cylindre et du piston. Sur la figure 2, le piston 21 a été représenté en position de butée haute, où ses cannelures 27 et 28 sont en appui respectivement sur les cannelures 25 et 26 du cylindre 21 respectivement. La butée basse est réalisée par appui du piston 22 sur le fond du cylindre 21 et par appui de la cannelure 28 du piston sur la cannelure 25 du cylindre.

Le piston comporte un joint composite spécial 30 maintenu par une bague en laiton 31 et une fente de guidage 32 coopérant avec une pièce anti-rotation 33 montée sur le cylindre 21, pour éviter la rotation du piston dans le cylindre.

Le cylindre 21 est fermé à sa partie supérieure par un carter 34 relié à son extrémité supérieure au piston 22 par un joint à soufflet déformable 35. Le piston est ainsi totalement isolé du milieu extérieur.

En se reportant aux figures 2 et 3, on va maintenant décrire le circuit d'alimentation en huile hydraulique du vérin 20. La chambre annulaire 23 limitée par le cylindre 21 et le piston 22 est alimentée en huile par une conduite 37 traversant le cylindre 21, débouchant dans la chambre 23 à l'une de ses extrémités et dans un bloc 38 fixé de façon étanche par un joint 39 sur le cylindre 21 à son autre extrémité. Le bloc 38 est percé d'un canal 41 dans le prolongement du conduit 37. Le canal 41 communique avec l'ouverture calibrée 42 de la chambre d'un clapet 40. On voit sur la figure 2, deux raccords de conduite 43 et 44 solidaires du bloc 38. La conduite 43 est en communication, à l'intérieur du bloc 38, avec la partie de la chambre du clapet située vers l'ouverture 42 alors que la conduite 44 est en communication avec l'extrémité à grand diamètre du clapet 40 opposée à l'ouverture 42 de petit diamètre. L'obturateur du clapet 40 est représenté dans sa position de fermeture sur la figure 2.

Sur la figure 3, on voit qu'un second clapet 48 est monté dans le bloc 38 de la même façon que le clapet 40. Une conduite 64 est reliée à la partie à grand diamètre du clapet 48 et des conduites 49 (en communication avec le canal 41) et 63, à la partie à petit diamètre du côté de son ouverture calibrée 62. A l'intérieur du bloc 38, une électrovanne 50 est intercalée sur la conduite 44 qui est reliée à l'extérieur du bloc 38 à une pompe hydraulique 53 et à accumulateur oléopneumatique 54 permettant l'alimentation du vérin 20 en huile à pression constante par l'intermédiaire des différents éléments du bloc 38. La conduite 64 est reliée à la conduite 44 avec interposition d'une électrovanne 51. La conduite 63 est elle-même reliée à l'électrovanne 51. La conduite 43 est reliée à l'extérieur du bloc 38 à un accumulateur oléopneumatique 56 et à un récipient d'huile 57 à la pression atmosphérique.

Enfin, le bloc 38 porte également un capteur de pression 46 en communication par un canal percé dans le bloc hydraulique 38 avec le canal 41 en aval du clapet 40.

On va maintenant décrire le fonctionnement du dispositif en se référant à l'ensemble des figures. Le clapet 40 joue le rôle de clapet de sécurité et le clapet 48, le rôle de clapet de remplissage du circuit.

Après un arrêt prolongé du laminoir, la chambre 23 du vérin 20 est vide d'huile et le piston 22 est en appui sur le fond du cylindre 21.

Pour effectuer le démarrage de l'installation, on ouvre l'électrovanne 51 et on met en marche la pompe hydraulique 53 qui envoie de l'huile sous pression par la conduite hydraulique 63 du bloc 38. L'huile parvient dans la chambre du clapet 48 et de là par ouverture de ce clapet dans les canaux 41 et 42 et la conduite 37

8

d'alimentation de la chambre 23. L'alimentation de la chambre est facilitée par la mise en pression grâce à l'accumulateur oloépneumatique 54 également en communication avec la partie d'entrée de la chambre du clapet 48. L'huile sous pression ne peut traverser le clapet 40 qui est soumis sur sa partie de grand diamètre à la pression de l'huile dans la conduite 44. Le clapet 40 reste ainsi hermétiquement fermé.

Lorsque la mise en pression de la chambre 23 est suffisante, le piston 22 vient dans sa position représentée à la figure 2 et le vérin hydraulique 20 est susceptible de transmettre la pression entre la vis 16 et l'empoise 12 sur laquelle il repose. Les électrovannes 50 et 51 sont en position de fermeture où l'huile sous pression vient dans la partie à grande section des clapets 40 et 48.

Pendant le laminage du produit, la force de laminage s'exerçant sur le cylindre de travail 4 et par son intermédiaire sur le cylindre d'appui 2 et sur son empoise 12 est transmise à la vis 16 par l'intermédiaire du vérin 20. La vis 16 permet de modifier le serrage du laminoir également par l'intermédiaire du film d'huile contenu dans la chambre 23 du vérin 20.

Pendant le fonctionnement du laminoir, les parties à petites sections des clapets 40 et 48 sont soumises à la pression régnant dans la chambre 23 par l'intermédiaire des conduites 37, 41, 49 et 59 et les grandes sections de ces clapets sont soumises à la pression de la pompe 53. Les rapports de section de ces clapets assurent la fermeture hermétique des clapets 40 et 48. Le film d'huile contenu dans la chambre 23 totalement isolé du circuit hydraulique assure la transmission des efforts entre les cylindres du laminoir et son bâti.

La pression de l'huile dans la chambre 23 est transmise au capteur 46 par la conduite 37 et les canaux

9

ménagés dans le bloc 38.

Cette pression mesurée par le capteur 46 est transformée par une unité de calcul en une valeur numérique représentant l'effort de laminage. Cette valeur numérique peut être affichée ou visualisée d'une façon quelconque pour donner les indications à l'opérateur en charge du pupitre de laminage.

On garde en mémoire les valeurs maximales atteintes au cours d'une passe de laminage et l'on réalise des enregistrements des efforts de laminage pour tous les produits laminés.

Le signal fourni par le capteur de pression est également utilisé dans un circuit électrique de commande de l'électrovanne 50 où ce signal électrique est comparé à un signal prédéterminé représentant la pression maximum acceptable dans la chambre 23 correspondant à l'effort de laminage maximal admis.

L'effort maximal de laminage admis est fonction des caractéristiques du bâti de la cage dont on veut s'assurer qu'il ne subira aucune détérioration ni aucune déformation. On choisit donc un coefficient de sécurité suffisant pour déterminer la valeur de l'effort maximal à partir de la résistance mécanique du bâti.

Dans le cas où un dépassement de la valeur de la pression admise dans la chambre 23 est enregistré par le capteur de pression 46, le circuit électrique de commande de l'électrovanne 50 provoque son ouverture. L'obturateur du clapet qui n'est plus soumis à la pression de l'huile sur sa partie à grande section peut s'ouvrir. Ce qui met en communication la conduite 43 avec l'ouverture 42 du clapet 40 et les conduites 59 et 41. L'ouverture de l'électrovanne 50 provoque donc la décharge de l'huile sous pression par la conduite 43 vers l'accumulateur oléopneumatique 56 qui permet d'encaisser le coup de bêlier produit par l'huile sous pression de la chambre 23 et vers

10

le récipient 57.

La pression dans la chambre 23 diminue très brutalement et le film d'huile n'assure plus la transmission des efforts ce qui se traduit par un déplacement vers le haut des cylindres supérieurs de la cage.

Le bâti n'est donc pas soumis à un effort tendant à dépasser la limite admise.

Mais la sécurité du dispositif est double puisque dans le cas où l'électrovanne 50 commandée par le capteur de pression 46 ne s'ouvrirait pas, la pression dans la chambre 23 s'appliquant sur la partie à faible section du clapet 40 crée une force qui devient supérieure à la force exercée par l'huile de la centrale hydraulique 53 s'appliquant sur la partie à grande section du clapet 40. Le rapport de section du clapet 40 est en effet choisi de façon qu'en cas de dépassement d'une certaine pression dans la chambre 23, la force exercée sur la partie à faible section du clapet 40 devienne supérieure à la force exercée par l'huile à pression constante fournie par la centrale 53, sur la partie à grande section du clapet 40.

Le rapport de section du clapet 48 est supérieur à celui du clapet 40 pour éviter que le clapet de remplissage 48 ne s'ouvre avant le clapet de sécurité 40.

En particulier, ces rapports de section sont choisis de façon à ne pas nécessiter des valeurs de pression trop élevées soit au remplissage, soit au moment du déclenchement du clapet. En particulier, on choisira une limite de pression telle qu'on ne risque pas d'engendrer une explosion de cette huile par un effet du type Diesel dans la chambre du vérin.

On voit que les principaux avantages du dispositif suivant l'invention sont l'obtention d'une fiabilité parfaite grâce à une double sécurité électrique et hydraulique avec un dispositif qui peut être facilement intercalé entre deux éléments d'une cage de laminoir existant et donc sans

0159239

11

nécessiter de modification ainsi que la mise à la disposition de l'opérateur, au pupitre de commande du laminoir, d'une mesure précise et continue de l'effort de laminage supporté par le bâti.

Pendant le fonctionnement normal du laminoir, la chambre du vérin est totalement isolée et sa pression interne qui peut être très élevée dépend uniquement de l'effort de laminage. On n'a donc pas à avoir recours à un circuit d'alimentation du vérin à très haute pression.

L'invention ne se limite pas au mode de réalisation qui vient d'être décrit.

On peut imaginer un dispositif de remplissage du vérin hydraulique différent de celui qui a été décrit.

Le montage du cylindre et du piston utilisant un système à baïonnette a l'avantage de permettre la fixation du piston dans le cylindre en même temps que la réalisation d'une butée haute et d'une butée basse du piston à l'intérieur du cylindre, tout en limitant la hauteur du vérin hydraulique, mais on peut imaginer d'autres types de montage.

L'invention s'applique non seulement dans le cas d'un laminoir quarto pour tôles fortes mais également dans le cas de tout laminoir duo ou quarto pour tôles ou pour barres.

## 12

## REVENDICATIONS

1.- Dispositif de protection contre les surcharges pour une cage de laminoir comportant un bâti (1) dans lequel sont montés au moins deux cylindres de laminage (2, 3, 4, 5) par l'intermédiaire d'éléments (7, 10, 12, 16) coopérant avec le bâti (1) pour résister à l'effort de laminage, constitué par un vérin hydraulique (20) intercalé entre deux éléments (12, 16) transmettant l'effort de laminage au bâti (1) de la cage, dont la chambre recevant un liquide sous pression communique, par l'intermédiaire d'un clapet (40), avec une zone de décharge du liquide sous pression, le clapet (40) étant associé à des moyens (50) le maintenant fermé pendant le fonctionnement normal du laminoir et permettant son ouverture pour la décharge du liquide sous pression, en cas de dépassement d'une pression prédéterminée dans la chambre du vérin (20) résultant d'une augmentation excessive de l'effort de laminage, ces moyens comportant un dispositif (53) fournissant un liquide à pression constante d'un côté du clapet (40),

caractérisé par le fait que le clapet (40) communique avec le dispositif (53) fournissant du liquide à pression constante, par l'intermédiaire d'une électrovanne (50) commandée par les indications d'un capteur de pression (46) mesurant la pression dans la chambre (23) du vérin hydraulique (20), de telle sorte que la chambre (23) initialement remplie de liquide sous pression par le dispositif (53) soit totalement isolée pendant le fonctionnement normal du laminoir, du liquide hydraulique maintenant le clapet (40) fermé et qu'en cas de dépassement de la pression prédéterminée dans la chambre (23), l'électrovanne (50) interrompe l'alimentation du clapet (40) èn liquide hydraulique sous pression.

2.- Dispositif de protection contre les surcharges suivant la revendication 1 caractérisé par le fait

13

qu'il comporte un circuit de remplissage de la chambre (23) du vérin (20) permettant le remplissage initial en liquide sous pression de la chambre (23), à partir du dispositif (53) fournissant du liquide hydraulique sous pression, par l'intermédiaire d'une électrovanne (51) et d'un clapet de remplissage (48).

3.- Dispositif de protection suivant la revendication 2, caractérisé par le fait que des accumulateurs oléopneumatiques (54, 56) sont placés de façon à être en communication avec la zone de décharge du liquide hydraulique et avec le circuit de remplissage respectivement

4.- Dispositif de protection contre les surcharges suivant l'une quelconque des revendications 1 à 3 dans le cas d'un laminoir quarto comportant un dispositif de serrage dans sa traverse supérieure, caractérisé par le fait que le vérin hydraulique (20) est intercalé entre le dispositif de serrage (16) et l'empoise (12) du cylindre d'appui supérieur du laminoir.

5.- Dispositif de protection contre les surcharges suivant l'une quelconque des revendications 1 à 4 caractérisé par le fait que le cylindre (21) et le piston (22) du vérin hydraulique (20) sont reliés par un système à baïonnette (25, 27, 26, 28) à l'intérieur du cylindre (21), constituant en même temps le dispositif de butée du piston (22) dans ses positions extrêmes à l'intérieur du cylindre (21).

6.- Dispositif de protection contre les surcharges suivant l'une quelconque des revendications 1 à 5 caractérisé par le fait qu'il comporte un dispositif (46) de mesure de pression dans la chambre (23) du vérin hydraulique associé à des moyens de calcul de l'effort de laminage à partir de la pression mesurée et d'affichage de cet effort de laminage.

# Fig 1

# Fig 2

1/2

0159239

# Fig 3

## RAPPORT DE RECHERCHE EUROPEENNE

Office europeen
des brevets

### DOCUMENTS CONSIDERES COMME PERTINENTS

| Categorie | Citation du document avec indication, en cas de besoin des parties pertinentes | Revendication concernee | CLASSEMENT DE LA DEMANDE (Int Cl.4) |
|---|---|---|---|
| D,X | DE-A-2 261 990 (LEISTRITZ HYDROWA GmbH HYDRAULISCHE ANLAGEN) <br> * "Figures 1-3; pages 1-3; page 4, alinéas 1 et 2; page 4, alinéas 6 et 7; pages 5,6 * | 1-6 | B 21 B 33/00 <br> F 16 P 7/00 |
| A | US-A-3 101 636 (UNITED STATES STEEL CORPORATION) <br> * Planche unique; colonnes 1-4 * | 1 | |

**DOMAINES TECHNIQUES RECHERCHES (Int. Cl.4)**

B 21 B
F 16 P

Le present rapport de recherche a été établi pour toutes les revendications

| Lieu de la recherche | Date d'achèvement de la recherche | Examinateur |
|---|---|---|
| LA HAYE | 27-06-1985 | NOESEN R.F. |